# EUROPEAN PATENT APPLICATION

(11) **EP 1 942 632 A2**
(43) Date of publication of application: **09.07.2008**
(21) Application number: 08380001.1
(22) Date of filing: 08.01.2008
(51) Int. Cl.: H04L 29/06, H04L 12/24

(54) **Method and system for automatic subscriber and service provisioning**

(30) Priority: 08.01.2007 ES 200700066
(71) Applicant: Vodafone Group PLC, Newbury Berkshire RG14 2FN (GB); Vodafone España, S.A., 28108 Alcobendas (ES)
(72) Inventor: Frisa Rubiol, Raquel, 28108 Alcobendas (Madrid) (ES); Cristobal Cristobal, José Manuel, 28108 Alcobendas (Madrid) (ES); Berna Fornies, Hector, 28108 Alcobendas (Madrid) (ES)
(74) Representative: Carpintero Lopez, Francisco

(57) **Abstract**

A method and system for automatic subscriber and/or telecommunications service provisioning between a credit control customer and a credit control server by means of the Diameter CCA protocol, comprising: sending a Diameter CCA protocol credit control request message from a credit control customer towards a credit control server, characterized by the fact that said credit control request message comprises at least one attribute value pair comprising information relating to a service and/or subscriber. The invention also relates to a credit control server and system.

## Description

### Field of the Invention

The present invention applies to the field of customer and service provisioning in a telecommunications network. The present invention more specifically applies to the field of the automatic provisioning of telecommunications services offered by third parties and to automatic provisioning of subscribers to access the supply of services offered by third parties.

### Background of the Invention

The Diameter protocol is standardized by the IETF (Internet Engineering Task Force) as a network protocol for the authentication, authorization and accounting (AAA) providing services such as access to the network, mobility in IP networks, etc. It is defined so that it can be extended to provide any type of AAA service to IP networks. Its complete description is included in RFC (Request for Comments) 3588.

The Diameter protocol came about from the evolution of the RADIUS protocol with new features, such as:
- It supports new transport protocols such as TCP or SCTP.
- It uses transport level security (IPSEC or TLS).
- Greater address space for specifying AVPs (Attribute Value Pairs) which include the information to be transported and identifiers (32 bits instead of 8).
- Peer-to-peer protocol between customer and server.
- It supports new fault tolerance methods, error notification, session and user control, etc.

The Diameter CCA protocol defines 4 types of CCR/CCA messages: such as EVENT_REQUEST, INITIAL_REQUEST, UPDATE_REQUEST and TERMINATION_REQUEST. INITIAL_REQUEST, UPDATE_REQUEST and TERMINATION_REQUEST are used to perform credit control in services requiring session maintenance (for example to charge a connection to Internet per minute or per volume), whereas the EVENT_REQUEST type is used to bill events (for example downloading an SMS, or initiating a connection to Internet, which later have a flat rate).

Based on the Diameter protocol, the IETF defines new standards under different RFCs, forming Diameter protocol applications. Some examples of said applications are: Diameter Credit Control Application (CCA) or Diameter Network Access Server (NAS).

However, the IETF is working on the development of new applications, such as Diameter URI (Uniform Resources Identifier), Diameter Quality of Service (QoS) Application, Diameter SIP (Session Initiation Protocol) Application or Diameter Mobile IP Application.

In addition, RFC 4006 provides that the Diameter protocol can be used to implement real time credit control for a variety of end user services such as accessing a network, SIP (Session Initiation Protocol) protocol-based services, messaging services and downloading services. The protocol is defined under these principles in the specification, such that the protocol is based on the use, according to different use cases, of two basic messages: Credit-Control-Request (CCR) Command and Credit-Control-Answer (CCA) Command. The codes for the commands (messages) of the Diameter Base protocol and their applications have been defined by the IANA (Internet Assigned Numbers Authority) in September 2005.

The architecture model that this protocol is based on introduces a new point of control called Diameter credit-control server, the entity responsible for credit authorization for pre-paid users.

It can additionally co-exist with other elements such as Authentication, Authorization and Accounting (AAA), responsible for authenticating and authorizing the end user to use AAA protocols such as Diameter Base or RADIUS. Said protocols can provide accounting information to the AAA server, but the information they provide is not sufficient for real-time credit control.

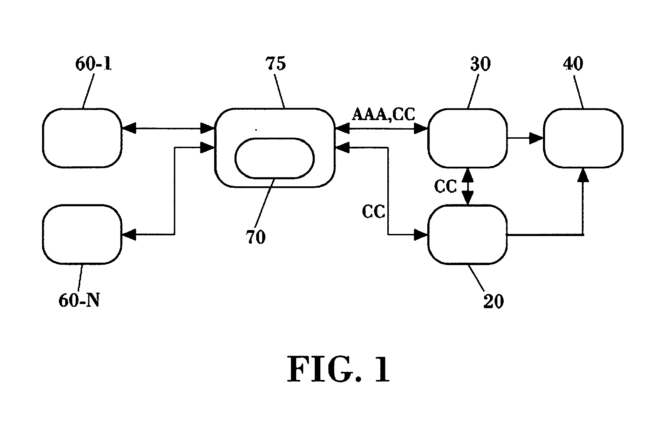

Figure 1 shows an example of conventional architecture of real-time credit control, as it is defined in RFC 4006. A credit control server (20) communicates with a credit control customer (70). The customer (70) and the server (20) exchange credit control (CC) protocol messages. These messages are: credit control request (CCR) message and credit control answer (CCA) message.

The credit control customer (70) of Figure 1 is comprised in a service element (75), which is the point of access of an end user or subscriber (60-1, ..., 60-N) to the services offered, typically IP, by the operator's network. Examples of service elements (75) are the GGSN nodes or Gateway GPRS Serving/Support Nodes, or application (internet, messaging, etc.) servers that a service provider has deployed.

Figure 1 also shows an Authorization, Authentication and Accounting server (30) (AAA Server), which is a server responsible for managing requests to access the operator's network. To that end it must carry a series of functionalities such as the authentication of the end user in the network, the authorization to use said resources and access to the subscriber's account where the use of said resource will be reflected.

The architecture of Figure 1 also shows a Business Support System (40), which represents all those servers, databases, and systems of the operator's network in general, which the AAA Server needs to access in order to complete its authentication, authorization and accounting tasks on the subscriber's accounts.

The CCR message is recognized for containing in the *command-code* field the value 272 and the 'R' bit activated in the *command flags* field. The CCR message is used in the communication of the Diameter credit control customer (70) towards the Diameter credit control server (20) to request credit authorization for a given service.

In all the messages, the *Auth-Application-Id* field must contain the value 4, to indicate that it is a message from the Diameter credit control application (CCA).

The general format of the credit control request CCR message is the following:

```
 <Credit-Control-Request> ::= < Diameter Header: 272, REQ, PXY >
                   < Session-Id >
                   {Origin-Host}
                   {Origin-Realm}
                   {Destination-Realm}
                   {Auth-Application-Id}
                   {Service-Context-Id}
                   {CC-Request-Type}
                   {CC-Request-Number}
                   [ Destination-Host ]
                   [ User-Name ]
                   [ CC-Sub-Session-Id ]
                   [ Acct-Multi-Session-Id ]
                   [ Origin-State-Id ]
                   [ Event-Timestamp ]
                  *[Subscription-Id ]
                   [ Service-Identifier ]
                   [ Termination-Cause ]
                   [ Requested-Service-Unit ]
                   [ Requested-Action ]
                  *[Used-Service-Unit ]
                   [ Multiple-Services-Indicator ]
                  *[ Multiple-Services-Credit-Control ]
                  *[Service-Parameter-Info ]
                   [CC-Correlation-Id ]
                   [ User-Equipment-Info ]
                  *[Proxy-Info]
                  *[Route-Record]
                  *[AVP]
```

The credit control answer (CCA) message is recognized for containing in the *command-code* field the value 272 and the 'R' bit deactivated in the *command flags* field. The CCR message is used in the communication from the Diameter credit control server (20) towards the Diameter credit control customer (70), and contains the answer to the previous CCR command or message.

The general format of the credit control answer (CCA) message is the following:

```
  <Credit-Control-Answer> ::= < Diameter Header: 272, PXY >
                  < Session-ld >
                  {Result-Code}
                  { Origin-Host }
                  { Origin-Realm }
                  { Auth-Application-Id }
                  { CC-Request-Type }
                  { CC-Request-Number }
                  [ User-Name ]
                  [CC-Session-Failover]
                  [CC-Sub-Session-Id]
                  [Acct-Multi-Session-Id]
                  [Origin-State-Id]
                  [ Event-Timestamp ]
                  [Granted-Service-Unit]
                  *[ Multiple-Services-Credit-Control ]
                  [ Cost-Information]
                  [ Final-Unit-Indication ]
                  [ Check-Balance-Result ]
                  [ Credit-Control-Failure-Handling ]
                  [ Direct-Debiting-Failure-Handling ]
                  [ Validity-Time]
                  *[ Redirect-Host]
                  [ Redirect-Host-Usage ]
                  [ Redirect-Max-Cache-Time ]
                  *[Proxy-Info]
                  *[Route-Record]
                  *[Failed-AVP]
                  *[AVP]
```

Furthermore, the Attribute Value Pairs or AVP are defined as the data structures in which the information is distributed by the Diameter Base protocol and its different applications, including the credit control application (CCA). RFC 3588 provides that the attribute value pairs or AVPs can be added arbitrarily to the Diameter messages. The definition and meaning of each and every one of the AVPs can be found in RFC 3488 and RFC 4006. AVPs are classified as being simple or grouped type. The simple type are classified as lnteger32, UTFString, Unsigned32, OctectString, etc. It is said that an AVP is the grouped type when it is in turn made up of other simple (any) and/or grouped type.

The Diameter protocol was designed to be extensible through mechanisms such as: definition of new values for AVPs, creation of new AVPs, creation of new authentication/authorization applications, creation of new accounting application or applications of authentication processes.

International patent application WO03/107647 A1 describes a method for depositing credit in a mobile user's account from a third party using the Diameter protocol.

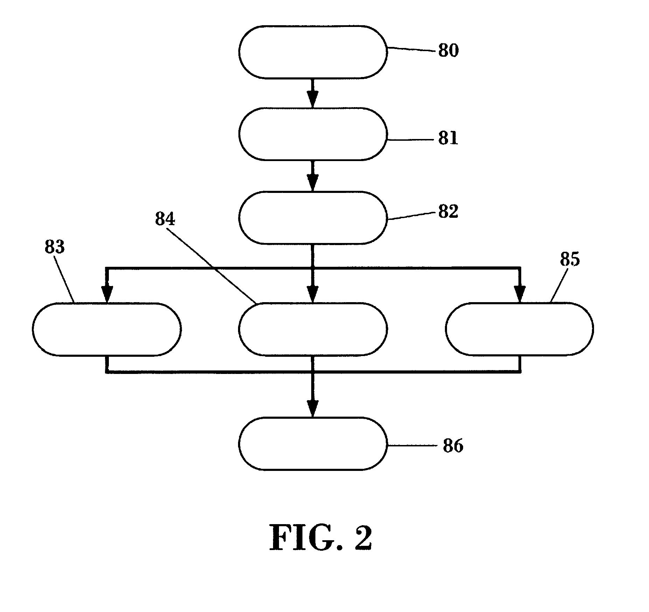

The traditional third party service provisioning in a network is shown in Figure 2:

First (80), a first official contact is made with the selected partner, where the details of the partnership to be signed are decided and said information is obtained. Then (81) the service provider company signs the legal agreement with the partner. Next (82) the company approves the relationship with the partner and the services of said partner are registered in the company's IT systems: registration in the service and subscriber billing systems (83), registration in the service and subscriber provision systems (84) and registration of the services that are going to be offered in network monitoring systems (OSS/BSS) (85). Finally, the partner can be notified that he/she can begin to offer its services to the end customer of the telecommunication services operator. These services can be wireless or cellular services.

The problem associated to the traditional third party subscriber and service provisioning process in a network is that all the steps depicted in Figure 2 require a step by step approval, and they further need the intervention of different people from different departments, including the registration report in the billing system, provision system, operation system, etc., which translates into a long time and great deal of money to simply begin to offer the end services.

### Object of the Invention

The object of the present invention is to maximally simplify both the service and customer provisioning process, with the subsequent savings in time, money, effort and resources. Therefore, the present invention provides a method and a system allowing the automatic provisioning of telecommunications services, as well as a method and a system allowing the automatic provisioning of new subscribers or customers for the services that are offered through a telecommunications operator, such that a service can start to be offered in the very moment in which it is requested by a subscriber, regardless of the traditional provisioning channels.

The present invention allows homogenizing the operator's architecture in relation to billing, registration or any other aspect related to services offered by the operator (and therefore, services installed in the domains thereof), third parties or partner companies.

In the event that the services are offered by third parties, the manual registration process that must be carried out in the conventional case by the telecommunications company is replaced by another simpler process in which it is the responsibility of the third party or service provider company to provide information on its services and its association to the subscriber information present in the operator's information systems.

Therefore, the present invention allows defining the information necessary for the services to be automatically and homogenously used by the subscribers of the telecommunications operator. In the event that the services are offered by third parties, the present invention allows the third parties to be able to defines their own charging patterns (pricing plan, billing model, etc.) under their own preferences and for the telecommunications operator to reduce the cost involved in the integration of new partners and allow them to accelerate said process.

One aspect of the present invention includes a method for the automatic provisioning of telecommunications services between a credit control customer and a credit control server by means of the Diameter CCA protocol, which comprises: sending from a credit control customer a Diameter CCA protocol credit control request message towards a credit control server, where said credit control request message comprises at least one attribute value pair comprising information relating to a service.

Another aspect of the present invention relates to a credit control server comprising a web application interface configured to generate a request relating to a service, where said request generates at least one SOAP protocol message; a translator for translating SOAP protocols to Diameter CCA protocol applications, configured to translate said at least one SOAP protocol message to Diameter CCA protocol messages; and a Diameter protocol stack comprising at least one credit control application configured to transmit and receive Diameter CCA protocol messages.

Another aspect of the present invention relates to a system for service provisioning comprising a credit control customer configured to send at least one Diameter protocol credit control request message towards a credit control server and a credit control server such as the one described above.

Furthermore, another aspect of the present invention includes a method for automatic subscriber provisioning between a credit control customer and a credit control server by means of the Diameter CCA protocol, which comprises: sending from a credit control customer a Diameter CCA protocol credit control request message towards a credit control server, where said credit control request message comprises at least one attribute value pair comprising information relating to a subscriber.

Another aspect of the present invention relates to a credit control server comprising a web application interface configured to generate a request relating to a subscriber, where said request generates at least one SOAP protocol message; a translator for translating SOAP protocols to Diameter CCA protocol applications, configured to translate said at least one SOAP protocol message to Diameter CCA protocol messages; and a Diameter protocol stack comprising at least one credit control application configured to transmit and receive Diameter CCA protocol messages.

Finally, another aspect of the present invention relates to a system for subscriber provisioning comprising a credit control customer configured to send at least one Diameter protocol credit control request message towards a credit control server and a credit control server such as that described above.

The web application interface is accessible and known by the party responsible for offering a new service or registering a new subscriber.

The credit control server comprises a model of the data contained in the user or subscriber's accounts.

### Brief Description of the Drawings

For the purpose of aiding to better understand the features of the invention according to a preferred practical embodiment thereof and to complement this description, a set of drawings is attached as an integral part thereof with an illustrative and non-limiting character. In these drawings:
Figure 1 shows an example of conventional real-time credit control architecture as it is defined in RFC 4006.
Figure 2 illustrates the traditional third party service provisioning process in a telecommunications network.
Figure 3 illustrates the third party service provisioning process in a network according to an embodiment of the present invention.
Figure 4 illustrates the different functional blocks or levels that allow carrying out the method of the present invention.
Figure 5A illustrates the management architecture for services and products offered by third parties and credit control according to the present invention.
Figure 5B illustrates the management architecture for user or subscriber subscriptions, user or subscriber account management and credit control according to the present invention.
Figure 6A shows a flow diagram with the message exchange between the different entities of the architecture of Figure 5A for a scenario in which a third party provides a new service.
Figure 6B shows a flow diagram with the message exchange between the different entities of the architecture of Figure 5B for a scenario in which a new subscriber accesses a service.

### Detailed Description of the Invention

Throughout this specification, the term "comprises" and its derivatives must not be interpreted in an exclusive or limiting sense, i.e. it must not be interpreted in the sense of excluding the possibility that the element or concept referred to includes additional steps or elements.

Furthermore, in the context of the present invention, the following terms are defined as follows:
Account: this term defines the set of data that a communications operator has on the end customer in its network. If it is a mobile communications operator, this set of data includes: telephone number or MSISDN, personal data for sending the bill, detail of the customer's consumption, pricing plans in which the customer is registered, etc...
Provision: this term defines a set of actions aimed at defining new values in a system. These values can be configuration parameters, services, equipment data, services, systems, user, etc. In the context of the present invention, provision is understood as the set of actions aimed at introducing or registering data associated to the customers or subscribers of communications services, for example, mobile communications services, as well as data associated to the actual communications services and to the necessary information of third party services that the operator's network must contain for the satisfactory operation and delivery of the service to the end customer or subscriber.
Third parties: Content/service providers or companies that are authorized to offer their services to the customers of a communications operator, regardless of the type of access (2G, GPRS, 3G, xDSL, Wi-Fi, etc.).
Customer: A system responsible for sending requests for requesting authorization, authentication, access to telecommunications services offered by the operator, and limit for making use of a network resource.
Mobile Telephone: Telephone, PDA, portable equipment or the like that can make and receive calls through wireless or cellular networks.
Accounting: The act of compiling resource use information for the purpose of planning capacity, auditing, billing or reserving.
Authenticate: The act of verifying the identity of an entity (or subject).
Authorization: The act of determining, by interrogating, if an entity will be authorized to access a resource (object).

### Example 1: Service provisioning

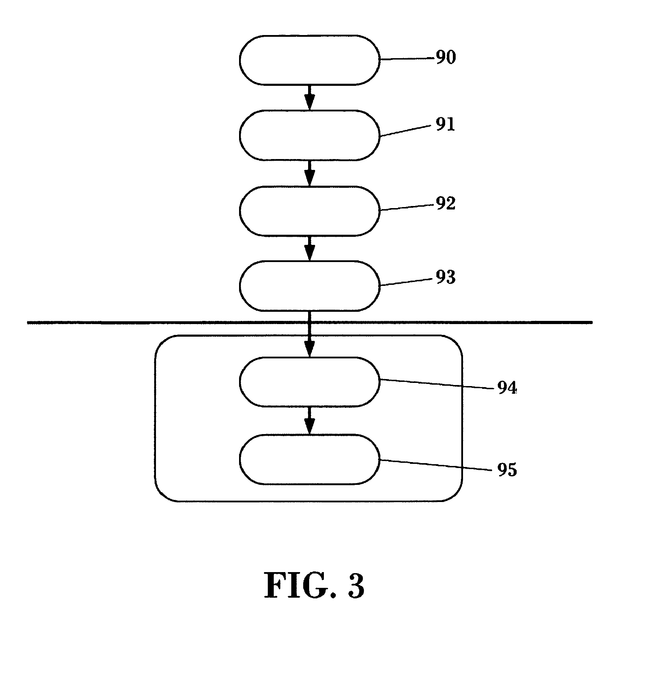

Figure 3 shows the automatic service provisioning process in a network according to an embodiment of the present invention. First (90), a first official contact is made with the selected partner, where the details of the partnership to be signed are decided and said information is obtained. Then (91), the service provider company signs the legal agreement with the partner. Next (92), the company approves the relationship with the partner. At this time the differences in relation to the traditional provisioning process shown in Figure 2, since the company delivers the dynamic provision library (93). The partner or third party develops the service or product (94) and then the service is integrated and commercially deployed (95).

As can be seen, the telecommunications company or operator is not responsible for registering the partner or third party in the billing, provisioning and reporting systems, but that the actual partner or third party is responsible for developing the service or product (94) and for integrating it in the platform of the telecommunications network (95).

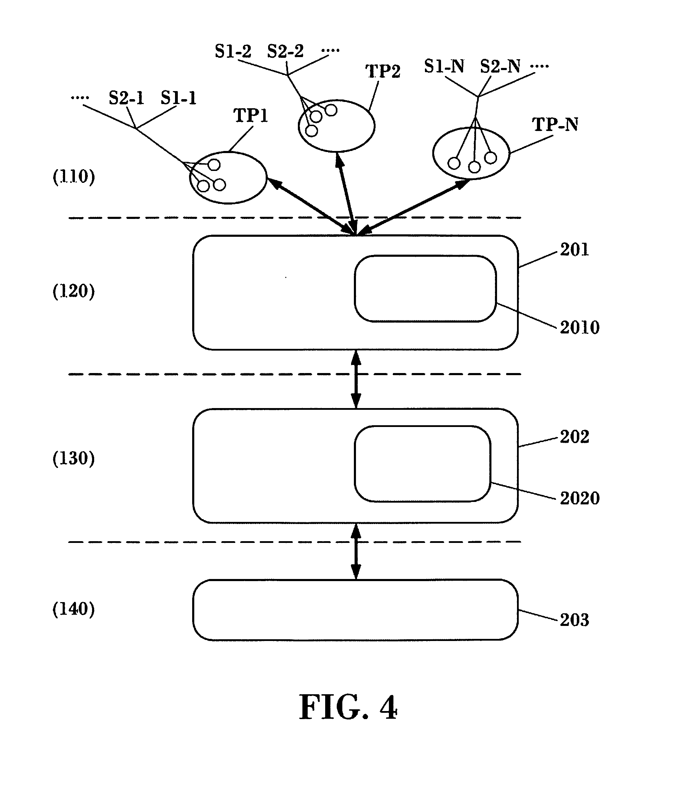

In relation to Figure 4, the different functional blocks which allow carrying out the service provisioning method of the present invention are the following:
- Service level (110): Level where different services (S1-1, S2-1, ..., S1-2, S2-2, ..., S1-N, S2-N, ...) offered by the third parties (TP1, TP2, ..., TP-N), usually located outside the borders of a telecommunications operator's network, are located.
- Web service level (120): the bridge systems giving access to third party applications to the domains of the network operator are located in this level. It comprises an application server (201) located in this level where the Web service (or Web services) (2010) carrying the automatic service provisioning operations, in addition to its own service and user or subscriber billing operations, will run.
- Adaptation level (130): Formed by application servers (202) where the information provided by third parties (TP1, TP2, ..., TP-N) through the Web services interface transmitted in SOAP messages (SOAP) is suitably translated (2020) to Diameter Base, NAS or credit control application commands to be distributed to the next level.
- IT applications level (140): Formed by all billing, provision and maintenance systems (203) of the service and user information that are used for billing, generating bills and reporting on the use of said third party services (TP1, TP2, ..., TP-N).

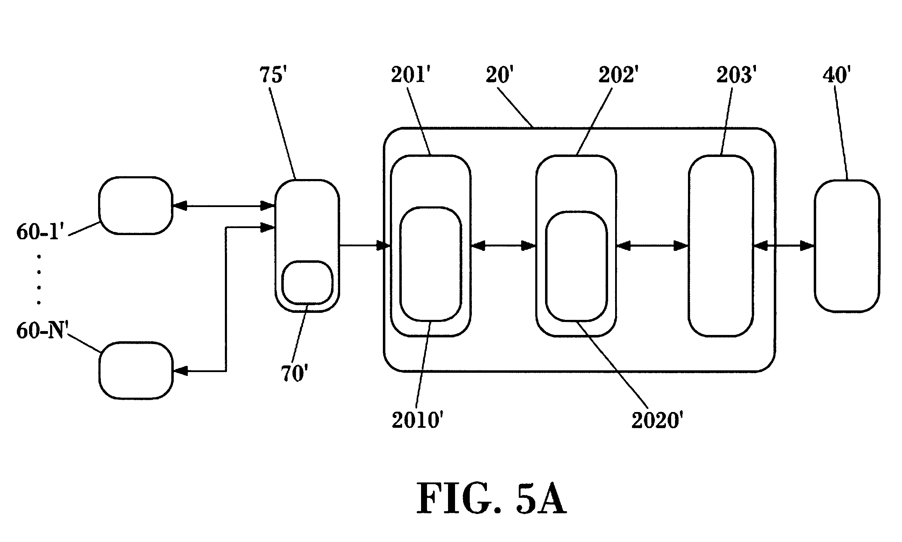

This is also depicted in Figure 5A, which shows an example of how the conventional architecture depicted in Figure 1 is modified according to the present invention such that the conventional credit control server (20) provides not only credit control, but also the management of services and products offered by third parties.

The credit control server (20') of Figure 5A comprises an application server (201') in turn comprising Web services server or interface (2010') and an application server (202') in tum comprising a translator (2020') for translating SOAP protocols to the Diameter Base protocol applications. The credit control server (20') further comprises a provisioning and billing system (203'). The Web services server (2010') communicates with the translator (2020') for translating SOAP protocols to Diameter Base protocol applications by means of SOAP protocol messages. The translator (2020') for translating SOAP protocols to Diameter Base protocol applications in turn communicates with the provisioning and billing system (203') by means of Diameter CCA (Credit Control Application) protocol messages.

The credit control customer (70') of Figure 5A is comprised in a service element (75') similar to the one described in Figure 1, which is the access point of an end user or subscriber (60-1', ..., 60-N') to the services offered by the operator's network.

Figure 5A also shows a business support system (40') such as those shown in Figure 1.

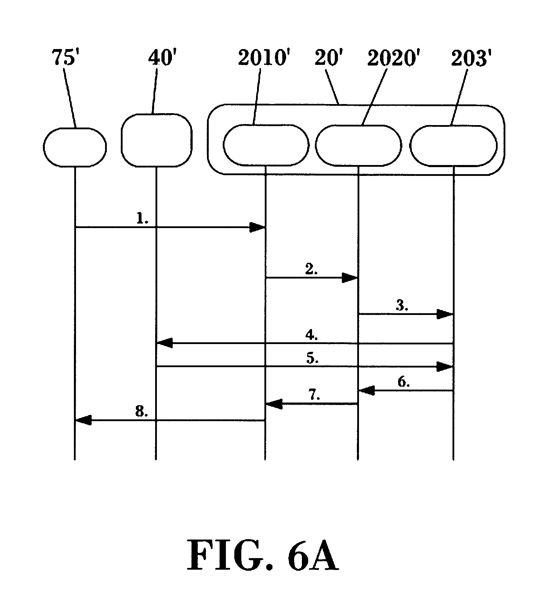

The flow diagram of Figure 6A depicts the message exchange between the different entities of the architecture of Figure 5A for a scenario in which a third party provides a new service:
1-The service provider (75'), which can be the actual telecommunications operator or a third party, makes use of the "createNewService" operation offered by the Web application server through a message sent over the HTTP/HTTPS protocol.
2-The operation is executed and translated into the generation of a SOAP message associated with the data necessary for creating the new service under the conditions imposed by the entity responsible for said service, which can be a third party. Said message is sent to the protocol translator (2020').
3-The SOAP message is translated to the Diameter CCA protocol CREATE_NEW_SERVICE type message and is sent to the suitable provisioning system or server (203').
4-The provisioning system or server (203') asks the business support systems (40') to create records (entries in databases, inclusion of information in new files, etc.) associated to the new product.
5-The result of said operation is sent back to the provisioning server (203').
6-The provisioning server (203') sends the result to the protocol translator (2020') through a Diameter CCA protocol CCA command.
7-The protocol translator (2020') translates the Diameter CCA message to the associated SOAP message.
8-This finally involves an answer through an HTTP/HTTPS message exchange with the entity responsible for the new service, informing that the new service provision has been successfully completed.

Additionally, the sequence of steps 1 to 8 can be repeated to create new products associated to that service. For example, if the offered service is to download tones, the different products can be catalogues of tones charged according to different conditions that can be established by the entity responsible for the service. This will involve "createNewDeal" type operations of the Web application server (2010') and the subsequent associated SOAP messages.

As indicated, Figure 6A depicts an example of a specific scenario (an entity provides a new service with its products). A person skilled in the art will understand that the flow diagram of Figure 6A is slightly modified when it is applied to different scenarios, such as the addition of a new product or elimination of an existing service.

The Web service level (120) shown in Figure 4 and depicted in Figure 5A by means of the Web services interface (2010'), forms the border between the third parties (in the event that said third parties are the providers of one or several certain services) and a telecommunications operator's network. The Web service level (120) offers a series of operations that third parties can use in their business logic to create their own services. This Web service level comprises five possible groups of operations that are detailed below:
1) Third party product operations: A *product* is considered to be a type of end service offered by a third party with its own features for its pricing plan, offers, etc. A product is, for example, downloading content under certain charging patterns, or a special pricing plan for voice calls. One or more products of one or several third parties can be associated in a user's account. These products represent the type of services that the end user has used or those which it may access. Typical operations of this group are: *acquire Product, modify Product, delete Product, get Product, get products Associated to an account,* etc.
2) Third party service operations: A *service* is considered to be the type of application that a third party offers to the end customers or subscribers. One or more services of one or several third parties can be associated in a user's account. These products represent the type of services the end user subscribes to. Typical operations of this group are: *create Service, modify Service, delete Service, get Services, get Services associated to an account, get Services from Partner, get Product defined in a Service,* etc.

The adaptation level (130) of Figure 4 is responsible for suitably translating the messages associated to the operations detailed in the previous section to credit control application protocol messages. The following table summarizes the correspondence between Diameter credit control application (Diameter CCA) operations and messages:

**Table 1**

| **Operation in the Web service level** | **Type of Diameter Message** |
|---|---|
| createService | CCR Event= CREATE_SERVICE |
| modifyService | CCR Event= MODIFY_SERVICE |
| deleteService | CCR Event= DELETE_SERVICE |
| getServices | CCR Event= GET_SERVICES |
| getServicesFromPartner | CCR Event= |
| | GET_SERVICES_FROM_PARTNER |
| getProductsFromService | CCR Event= |
| | GET _PRODUCTS_FROM_SERVICE |
| getDealsFromService | CCR Event= |
| | GET_DEALS_FROM_SERVICE |
| getPrice | CCR Event= GET_PRICE |
| addProductToService | CCR Event= ADD_PRODUCT_TO_SERVICE |
| deleteProductFromService | CCR Event= |
| | DELETE PRODUCT_FROM_SERVICE |
| createProduct | CCR Event= CREATE_PRODUCT |
| modifyProduct | CCR Event= MODIFY_PRODUCT |
| deleteProduct | CCR Event= DELETE_PRODUCT |
| getProduct | CCR Event= GET_PRODUCT |
| getProductsFromPartner | CCR Event= |
| | GET_PRODUCTS_FROM_PARTNER |
| getServicesFromProduct | CCR Event= |
| | GET_SERVICES_FROM_PRODUCT |
| modifyDeal | CCR Event= MODIFY_DEAL |
| deleteDeal | CCR Event= DELETE_DEAL |
| getDeal | CCR Event= GET_DEAL |
| addServiceToDeal | CCR Event= ADD_SERVICE_TO_DEAL |
| getServicesFromDeal | CCR Event= |
| | GET_SERVICES_FROM_DEAL |
| deleteServiceOfDeal | CCR Event= DELETE_SERVICE_OF_DEAL |

As stated, Figure 5A describes a credit control server (20') according to one aspect of the present invention, comprising: a web application interface (2010') configured to generate a request relating to a service, where said request generates at least one SOAP protocol message; a translator (2020') for translating SOAP protocols to Diameter CCA protocol applications, configured to translate said at least one SOAP protocol message to Diameter CCA protocol messages; and a Diameter protocol stack comprising at least one credit control application configured to transmit and receive Diameter CCA protocol messages. Said Diameter protocol stack is a conventional Diameter Base protocol stack, which can be configured to be able to recognize commands of other Diameter Base CCA protocol applications, NAS Diameter, etc.

Figure 5A further shows a system for service provisioning, comprising at least one credit control customer (70') configured to send at least one Diameter protocol credit control request (CCR) message towards a credit control server (20'), and a credit control server (20') such as the one described above.

The provisioning method of the present invention is based on defining new events associated to the credit control messages (CCR), involving the modification of standard messages defined by the protocol by means of modifying the values of the AVPs and adding new ones. As a result of defining new events the credit control server (20') can be used to offer services, access services, manage user accounts, etc.

As previously stated, the codes for the commands (messages) of the Diameter Base protocol and its applications were defined by IANA in September 2005. The present invention takes advantage of the fact that there are values that have not been assigned; therefore they can be used to defines new AVPs necessary for service and subscriber provisioning. These unassigned values are: 256, 286-290, 301-317, 324, 327, 349-362, 368-399, 409-410, 466-479, 481-482, 488-0xffffff. The same occurs for specific values of some AVPs, therefore new values can be added.

The method for automatic service provisioning is more specifically based on the attribute value pair (AVP) called service parameter information (*Service-Parameter-Info).*

The standard defines this service parameter information (*Service-Parameter-Info)* AVP (Code 440) as a "Grouped" type and it contains specific information on the service used for calculating the price or fee. It is in turn made up of two other attribute value pairs AVPs:

```
 Service-Parameter-Info ::= < AVP Header: 440 >
                  {Service-Parameter-Type}
                  {Service-Parameter-Value}
```

The service parameter type *(Service-Parameter-Type)* AVP (AVP code 441, type Unsigned32) defines the service parameter type, whereas the service parameter value (*Service-Parameter-Value)* AVP (AVP code 442, OctetString) contains the corresponding value. RFC 4006, involving the Diameter credit control application (Diameter CCA) protocol does, does not define the specific content of these AVPs.

The provisioning method of the present invention provides a new attribute value pair (AVP) comprising information relating to a service. This new attribute value pair (AVP) is sent in a Diameter protocol credit control request (CCR) message from a credit control customer (70') towards a credit control server (20'). This new attribute value pair (AVP) has been called service parameter grouped information *(Service-Parameter-Grouped-Info),* and is preferably assigned to the IANA 490 free code. It is the Grouped type and has the following structure:

```
 Service-Parameter-Grouped-Info ::= < AVP Header: 440 >
                 {Service-Parameter-Type}
                 *{Service-Parameter-Info}
                        {Service-Parameter-Type}
                        {Service-Parameter-Value}
                 *[ Service-Parameter-Grouped-Info ]
```

As can be observed, the service parameter grouped information *(Service-Parameter-Grouped-Info)* attribute value pair (AVP) in turn comprises an attribute value pair with which a service parameter type *(Service-Parameter-Type)* and an attribute value pair defining a service parameter information *(Service-Parameter-Info)* are indicated.

As can be observed in the previously shown structure, said service parameter information *(Service-Parameter-Info)* consists of an attribute value pair indicating a service parameter type *(Service-Parameter-Type)* and an attribute value pair defining a service parameter value *(Service-Parameter-Value).*

The service parameter grouped information *(Service-Parameter-Grouped-Info)* attribute value pair (AVP) is preferably included or embedded in a Diameter protocol event type message, with the *CC-Request-Type* AVP with EVENT_REQUEST(4) value, to specify the information necessary to create, modify, create or delete third party services, third party products, etc. A sample of the possible values that the AVPs embedded in the service parameter grouped information *(Service-Parameter-Grouped-Info)* AVP can have is shown in the following Table 2. It must be noted that Table 2 shows the information that is usually present at the IT applications level, but which can slightly vary from one operator to another.

**Table 2**

| **Service-Parameter-Type** | **Value** | **Description** |
|---|---|---|
| 1 | PLAN-ID | Pricing plan |
| 2 | NAME | Name of the Plan |
| 3 | START-TIME | Start time for providing the service. |
| 4 | END-TIME | End time for providing the service. |
| 5 | OPERATION | Type of operation to be performed. |
| 10 | RESULT-CODE | Result of providing the service |
| 11 | PARTNER-ID | Identifier of the partner providing the service. |
| 12 | PRODUCT-ID | Identifier of the product that has been provided. |
| 15 | SERVICE-ID | Service identifier. |
| | | *For example, for the partner MegaTonix^{™}, the service can be "Download poly-tone", and the product can be "David Bisbal's last record", and the deal "Song number 1 on the record".* |
| 16 | NUM-PLAYERS | Number of players or user involved in providing the service. For example it can be applied to the service of multiplayer online games. |
| 17 | BET | Amount of the bet. |
| | | For example, for online games, value of the game, which can be used to give credit to the winner by means of points, which can be traded in for other services from the partner. |
| 18 | PRICE | Price of the service provided. |
| | | In downloads, price of the download. In multiplayer games, price for access. All these values can generally be configured by the partner. |
| 22 | RUM | Value designated to define the metrics which will be used to calculate the end cost of the product. |
| 23 | ROUND-PRICE-ID | Value of a round in a multiplayer game. |
| 24 | MONEY | Monetary unit used. It can be real or fictitious. |
| 28 | DEAL-ID | Deal identifier, for example "David Bisbal's song". |
| 31 | STATE | State information. |
| 33 | EVENT-ID | Type of event. Customizable value depending on the service. |
| 37 | COST | General cost of a service. |
| 40 | PRODUCT-TYPE | Product type offered by the partner. |
| 102 | PRODUCT | Product |
| 103 | ROUND-PRICE | Round price of a service. |
| 104 | DEAL | Deal |
| 105 | SERVICE | Service |

In addition, the service parameter value (*Service-Parameter-Value)* AVP contains the specific value giving information as to the different types of the service parameter type *(Service-Parameter-Type)* AVP messages.

A specific example of the type of operations that can be carried out by means of the service provisioning method of the present invention is shown below. The following table details the values that must be assigned to the value of the Service-Parameter-Type AVP when its value is 5, corresponding to *Operation.*

**Table 3**

| **Possible values for the *"value"* of the *Service-Parameter-Type AVP* when its *type* is 5** | **Meaning of the *"value"* of the Service-Parameter-Type AVP** |
|---|---|
| 60 | CREATE-SERVICE |
| 61 | MODIFY-SERVICE |
| 62 | DELETE-SERVICE |
| 63 | GET-SERVICES |
| 64 | GET-SERVICES-FROM-PARTNER |
| 65 | GET-PRODUCTS-FROM-SERVICE |
| 66 | GET-DEALS-FROM-SERVICE |
| 67 | GET-PRICE |
| 68 | ADD-PRODUCT-TO-SERVICE |
| 69 | DELETE-PRODUCT-FROM-SERVICE |
| 70 | CREATE-PRODUCT |
| 71 | MODIFY-PRODUCT |
| 72 | DELETE-PRODUCT |
| 73 | GET-PRODUCT |
| 74 | GET-PRODUCTS-FROM-PARTNER |
| 75 | GET-SERVICES-FROM-PRODUCT |
| 91 | MODIFY-DEAL |
| 92 | DELETE-DEAL |
| 93 | GET-DEAL |
| 95 | ADD-SERVICE-TO-DEAL |
| 96 | GET-SERVICES-FROM-DEAL |
| 97 | DELETE-SERVICE-FROM-DEAL |

The exact value of the parameters that can be included in the *Service-Parameter-Type* AVP depends on the IT applications level of the system depicted in Figure 4. In other words, the IT applications level is a billing system which can be proprietary and even designed by the operator's own IT departments, therefore the manner in which the information is represented in them may differ from some operators to others. Therefore, it may be necessary to include more parameters in Table 2 or to eliminate some, etc.

It has previously been indicated that the service parameter grouped information *(Service-Parameter-Grouped-Info)* attribute value pair (AVP) is preferably included or embedded in a Diameter CCA protocol event type message.

This Diameter CCA protocol event type message is generated from a request made from a web interface of an application server, as indicated in Figure 5A (2010'). This request made from a web interface (2010') originates one or more SOAP protocol messages. In the event that third parties or partner companies of the communications operator have access to said web interface (2010'), said request is made by one or several third parties.

Once said request has been generated from the web interface (2010') of an application server (201'), it is necessary to translate the messages generated by said interface, which are preferably SOAP protocol messages, to Diameter CCA protocol messages. It must be noted that the CCA protocol is currently the most wide-spread in credit control standards, and it therefore seems that the protocol will lead the field of credit control. Any variation from the Diameter CCA protocol, including possible proprietary or proprietary IT system based solutions, must be considered equivalent to that described in the present invention.

In addition, an answer (CCA) message to the Diameter protocol credit request (CCR) is sent from the credit control server (20') towards the credit control customer (70').

To give an example of Diameter CCA Messages, the format for Diameter messages of the "Service Creation" operation is detailed below. It must be noted that when the name of an AVP is between brackets, it means that its inclusion in the message is optional. In the following example, some of these optional AVPs are crossed out because they have not been used in said example, but they have been included in the example so that the message does not lose generality. This example must be considered to be merely illustrative and non-limiting.

```
 Credit Control Request
 <Credit-Control-Request> ::= <Diameter Header: 272, REQ, PXY >
 < Session-Id > = adaptation.;<val1>;<val2>;<Tstamp>l<@MAC>
 // Identifier of the session the request relates to
 {Origin-Host} = adap.system.customer
 //Name of the origin host (sender) of the request
 {Origin-Realm } = vodafone.com
 // Name of the virtual domain in which the request is handled
 {Auth-Application-Id} = 4
 // Fixed value, identifier of the application or type of service. It is usually
 assigned by the telecommunications operator.
 {Service-Context-Id}= version1.third.party@vodafone.com
 // Service being requested
 {CC-Request-Type}= 4 (EVENT_REQUEST)
 // Type of message
 {CC-Request-Number}=0
 // Message sequence number indicator: this value increases successively
 throughout the session.
 [ Destination-Host ] = system.server.VF
 //Destination host of the request CCR
 [ User-Name ]= service1.type@provider.com
 //Application that is making use of the service.
 //Sub-session identifier. The Diameter Base protocol allows defining sub-
 sessions within an existing session. The creation of sub-sessions is used to
 carry out accounting for different events or situations that can be billed within a
 service associated to a session.
 // Correlation identifier of different sub-sessions within a session.
 // Identify that it has the value of the number of times that the Diameter CCA
 protocol stack has been restarted
 [Event-Timestamp ] = 10/02/2006 17:51:47
 //Date of system on which the message was sent
 *[ Subscription-Id ]=
     {Subscription-Id-Type} = 4 (PRIVATE)
     {Subscription-Id-Data } = <provider-id>
 // Provider subscription identifier. The Subscription-Id-Type A VP indicates the
 format of the value encapsulated in the Subscription-Id-Data. Possible values
 for the Subscription-Id-Type are 0 when it is in E.164 format, 1 for IMSI
 (International Mobile Subscriber Identity) format, 2 if it is SIP URI, 3 if it is NAI
 (Network Access Identifier) type or 4 if the format is private. In this case the
 Subscription-Id-Data will be the name or identifier of the service provider,
 written in private format.
 [Service-Identifier ] = <name_new_service>
 // This AVP is used to include the identifier of the service that is being provided
 to the end user.
 // This AVP can be used when Diameter CCA protocol event type messages
 are used, and it can have different values when a session is terminated by one
 of the active parties in the communication (Customer or server) to identify the
 causes.
 // This AVP is used to include information regarding the measurement units
 required to start providing a service. It makes sense if the messages are user
 credit control CCR messages.
 // This AVP indicates the required type of credit control action. It makes sense
 if the CCR command corresponds with any of those defined for controlling the
 user's credit.
 // This message is included in the user credit control CCR messages to include
 information about the credit units (minutes, volume, monetary units, etc...)
 consumed by the user until that moment in the session.
 // This value is used in user credit control CCR messages and specifies if the
 Diameter customer is able to manage the credit control of different services or
 events that can be billed within the same session, regardless of the existence
 of sub-sessions.
 // This AVP is used in the Diameter messages CCR to include information of
 the different services that are being billed such as requested and granted
 units, type of rate applied, rate identifier, validity time of the granted units, etc.
 // This identifier is used to correlate different CCR commands generated by
 different service elements, if any (in the event there is any redundancy, for
 reasons of protection, sizing, etc.)
 // This AVP includes information of the type of hardware in the equipment in
 which the customer application is installed to determine its capacity for
 connecting to a network.
 // This AVP contains information on the intermediate proxy elements through
 which the CCR command has passed. Its use only makes sense if said
 elements are being included in the architecture.
 // This AVP contains the identity of the previous element through which the
 Diameter message passed. If there are no intermediate proxies, the value
 must coincide with the Origin-Host AVP.
 [ Service-Parameter-Info ] =
     { Service-Parameter-Type} = 5
     { Service-Parameter-Value } = 60 (CREATE_SERVICE)
 [ Service-Parameter-Info ] =
     {Service-Parameter-Type}=11
     {Service-Parameter-Value}=<partner-id>
 [ Service-Parameter-Info ] =
     {Service-Parameter-Type}=2
     {Service-Parameter-Value}=<name>
 *[Service-Parameter-Info] =
     {Service-Parameter-Type}=12
     {Service-Parameter-Value}=<product -id>
 *// This succession of Service-Parameter-Info and Service-Parameter-
 Grouped-Info type AVPs contains information on the service that is being
 managed: pricing plan identifier, end user balance identifier. Before creating
 the account, the user has accessed a third party service having a pricing plan,
 a name, etc., associated thereto.
 *[Service-Parameter-Grouped-Info] =
     [ Service-Parameter-Type] = 102 (PRODUCT)
     [ Service-Parameter-Info ] =
            {Service-Parameter-Type} = 12
            {Service-Parameter-Value} = <product-id>
     [ Service-Parameter-Info ] =
            {Service-Parameter-Type} = 11
            {Service-Parameter-Value} = <partner-id>
     [ Service-Parameter-Info ] =
            {Service-Parameter-Type} = 2
            {Service-Parameter-Value} = <name>
     [Service-Parameter-Info ] =
            {Service-Parameter-Type} = 40
            {Service-Parameter-Value} = <product-type>
     [Service-Parameter-Info] =
            {Service-Parameter-Type} = 20
            {Service-Parameter-Value} = <subscription-type>
     [Service-Parameter-Info ] =
            {Service-Parameter-Type} = 21
            {Service-Parameter-Value} = <amount>
     [Service-Parameter-Info ] =
            {Service-Parameter-Type} = 22
            {Service-Parameter-Value} = <rum>
     *[ Service-Parameter-Grouped-Info ] =
            [ Service-Parameter-Type ]= 103 (ROUND-PRICE)
            [ Service-Parameter-Info ] =
                  {Service-Parameter-Type}=23
                  {Service-Parameter-Value}= <round-price-id>
            [ Service-Parameter-Info ] =
                  {Service-Parameter-Type} = 31
                  {Service-Parameter-Value} = <state>
            [Service-Parameter-Info ] =
                  {Service-Parameter-Type} = 21
                  {Service-Parameter-Value} = <amount>
            [Service-Parameter-Info ] =
                  {Service-Parameter-Type} = 38
                  {Service-Parameter-Value} = <percentage>
 // This Service-Parameter-Grouped-Info type AVP contains the information
 provided by the entity responsible for the service and necessary for registering
 the new service with the associated products. The information that must be
 included is indicated between less than (<) and greater than (>) symbols.
 Credit Control Answer
 <Credit-Control-Answer> ::= < Diameter Header: 272, PXY >
 < Session-Id > = adap.opera; <val1 >; <val2>; <Tstamp>l<@MAC>
 // Identifier of the session that the request refers to. It must coincide with the
 value of this AVP in the associated request CCR.
 {Result-Code} = 2001 (DIAMETER_SUCCESS)
 // Number code indicating the result of the execution of the previous request.
 Different results are defined in RFC 4006.
 {Origin-Host} = system.server.VF
 //Name of the origin host (sender) of the request
 {Origin-Realm} = vodafone.com
 ll Name of the virtual domain in which the request is handled
 { Auth-Application-Id } = 4
 // Fixed value, identifier of the application or type of service. It is usually
 assigned by the telecommunications operator.
 { CC-Request-Type} = 4 (EVENT_REQUEST)
 //Type of message
 {CC-Request-Number} = 0
 // Message sequence number indicator: this value increases successively
 throughout the session.
 // Application that is making use of the service.
 // This AVP contains information about if the server supports failover
 mechanisms.
 //Sub-session identifier. The Diameter Base protocol allows defining sub-
 sessions within an existing session. The creation of sub-sessions is used to
 carry out accounting for different events or situations that can be billed within a
 service associated to a session.
 // Correlation identifier of different sub-sessions within a session.
 // Identify that it has the value of the number of times that the Diameter CCA
 protocol stack has been re-started
 [ Event-Timestamp ] = 10/02/2006 17:51:47
 //Date of the system indicating the moment in which the answer CCA was
 sent.
 // This AVP is used in Diameter CCA subscriber credit control type messages
 to specify the service control units (minutes, volume, etc.) that the user has
 assured for the current credit balance associated to his or her account. It may
 or may not coincide with the units reflected in the Requested-Service-Unit A VP
 of the CCR command.
 // This AVP is used in Diameter CCA messages to include information of the
 different services that are being billed such as requested and granted units,
 type of rate applied, rate identifier, validity time of the granted units, etc.
 // This AVP is used in Diameter CCA messages to include service cost
 information in monetary units defined by the ISO 4217 standard.
 // This AVP is used in Diameter CCA subscriber credit control type messages
 to indicate if the units specified in the Granted-Service-Units A VP are the last
 available units according to the user's balance for the service in progress. It
 will also indicate the action that must be taken after said units expire.
 // This AVP is used in the Diameter CCA subscriber credit control type
 messages to indicate whether or not the subscriber has enough credit in his or
 her balance to access the service requested by the Service Element.
 // This AVP contains information on the failover mechanism accepted by the
 Diameter server. For example, in the event that the messages are not correctly
 delivered to the server, it indicates if another attempt should be made to send
 them, if the session should be terminated or if they should be redirected to any
 other server entity acting as backup.
 // This AVP contains information on the failover mechanism accepted by the
 Diameter server when credit control operations are being conducted. For
 example, in the event that the messages are not correctly delivered to the
 server, it indicates if the service should still be offered to the end customer
 even at the cost of not assuring the payment, or if said messages should be
 stored in some buffer type entity.
 // This AVP contains information on the validity time during which the
 measurement units for the service (minutes, volume, etc.) that is being
 provided can be used. Including it in Diameter CCA messages only makes
 sense when they are messages associated to a subscriber credit control.
 // This AVP may appear multiple times or not, indicating the host to which the
 present Diameter message should be readdressed.
 // This AVP indicates how redirect mechanisms must be done: through cache,
 through the realm, if it must be done for all the messages belonging to the
 same session, etc. Including it in Diameter CCA messages only makes sense
 when the Diameter server supports redirect mechanisms.
 // This AVP appears when the Diameter server supports redirect mechanisms
 and indicates the maximum number of seconds that the messages which must
 be readdressed will remain in cache.
 // This AVP contains information on the intermediate proxy elements through
 which the CCR command has passed. Its use only makes sense if said
 elements are being included in the architecture.
 ll This AVP contains the identity of the previous element through which the
 Diameter message passed. If there are no intermediate proxies, the value
 must coincide with the Origin-Host AVP.
 *[Failed-AVP]
 // The CCR command associated to this answer CCA and which were not
 successfully analyzed by the server.
 [ Service-Parameter-Info ] =
     {Service-Parameter-Type}=10
     {Service-Parameter-Value}=<result-code>
 // This Service-Parameter-Info type AVP is also included to indicate an error
 code associated to the create account operation: if it has been carried out
 successfully or not and the reason for the error, if any.
 [ Service-Parameter-Info ] =
     {Service-Parameter-Type}=15
     {Service-Parameter-Value}=<service-id>
 // This Service-Parameter-Info type AVP is included to return the service
 identifier that has been created. This value will be propagated towards the
 entity requesting the new service creation for its subsequent use in the
 subscriber credit control while providing the service.
```

A complex Credit-control Server (20') allowing the implementation of a larger number of processes which go beyond credit control for a prepaid service offered by the telecommunications operator itself is thus obtained under the sample architecture proposed in the standard.

### Example 2: Subscriber provisioning

An example of how one aspect of the present invention allows subscriber provisioning is shown below.

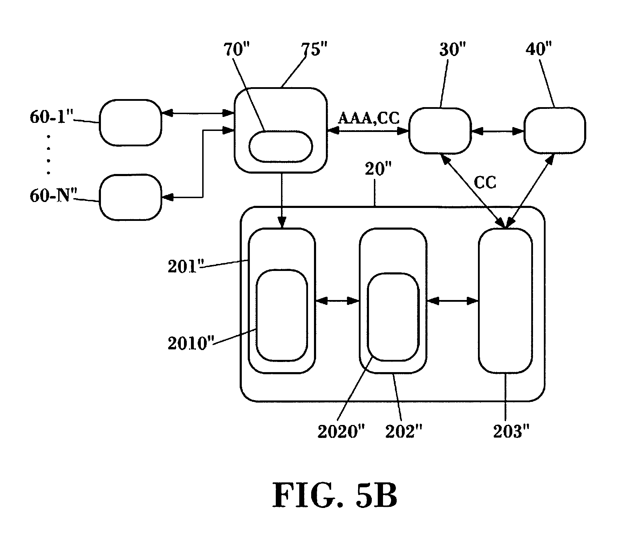

Based on the diagram of Figure 4, the functional blocks of which have been described above, Figure 5B shows an example of how the conventional architecture depicted in Figure 1 is modified according to the following embodiment of the present invention, such that the conventional credit control server (20) provides not only credit control, but also user or subscriber subscription management and user or subscriber account management.

The credit control server (20") of Figure 5B comprises a first application server (201") in turn comprising a Web services server or interface (2010") and a second application server (202") in turn comprising a translator (2020") for translating SOAP protocols to Diameter Base protocol applications. The credit control server (20") further comprises a provisioning and billing system (203"). The Web services server (2010") communicates with the translator (2020") for translating SOAP protocols to Diameter Base protocol applications by means of SOAP protocol messages. At the same time, the translator (2020") for translating SOAP protocols to Diameter Base protocol applications communicates with the provisioning and billing system (203") by means of Diameter CCA (Credit Control Application) protocol messages.

The credit control customer (70") of Figure 5B is comprised in a service element (75") similar to the one described in Figure 1, which is the access point of an end user or subscriber (60-1", ..., 60-N") to the services offered by the operator's network.

Figure 5B also shows an Authorization, Authentication and Accounting server (30") (AAA Server), as well as a Business Support System (40"), such as those shown in Figure 1. The Authorization, Authentication and Accounting server (30") communicates with the provisioning and billing system (203") by means of CCA (credit control application) messages.

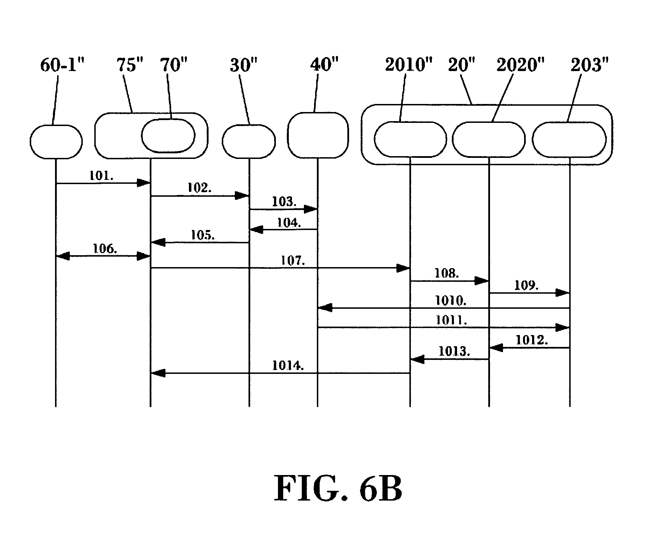

The flow diagram of Figure 6B depicts the message exchange between the different entities of the architecture of Figure 5B for a scenario in which a new subscriber accesses a service:
101- The end user (60-1 ") accesses a service (3G, GPRS, etc.) for the first time. This involves a different service request message according to the access interface (air, cable, etc.).
102- The service element (75") sends a Diameter Base AAR message command to the Authentication, Authorization and Access (AAA) server (30") in order to see if the user (60-1") subscribes to said service and has an associated account.
103- The AAA server (30") consults the operator's systems (databases, etc.) (40") through messages that are usually dependent on the type of system involved (SQL sentences when dealing with databases, or other proprietary methods).
104- The result is negative given that the user (60-1 ") is new and there are no records in the operator's systems for said user (60-1 "). The answer is returned in the same format of the messages in section 103.
105- The AAA server (30") sends as an answer to the service element (75") a Diameter Base protocol AAA command denying access to the service given that the user (60-1 ") is not registered.
106- The service element (75") must know certain essential user information in order to register him or her and then a data request process begins. If, for example, the service is offered over the web, the process involves the message exchange over the HTTP/HTTPs protocol.
107- The service element (75") asks the Web application server (201", 2010") for a "createNewAccount" type operation.
108- The operation is executed and translates into the generation of a SOAP message associated with the data necessary to create the new account under the conditions imposed by the entity responsible for said service, which can be a third party. Said message is sent to the protocol translator (2020").
109- The SOAP message is translated to the Diameter CCA protocol CREATE_NEW_ACCOUNT type message and is sent to the suitable provisioning system or server (203").
1010- The provisioning system or server (203") asks the business support systems (40") to create records (entries in databases, inclusion of information in new files, etc.) associated to the new account for the new user (60-1 ").
1011-The result of said operation is sent back to the provisioning server (203").
1012- The provisioning server (203") in turn sends the result to the protocol translator (2020") through a Diameter CCA protocol CCA command.
1013 -The protocol translator (2020") translates the Diameter CCA message to the associated SOAP message.
1014- The Web services server (2010") returns the result of the operation to the service element (75").
1015- This involves implicit authorization to provide the service to the end user (60-1 "), but it is necessary to repeat steps 107 to 1014 beforehand for the operation offered by the Web services server (2010") "purchaseDeal". This operation means that the deal that the end user (60-1 ") wants must be recorded in said user account information (60-1 ").

Additionally, and depending on the conditions (billing rate, time slot, etc.) imposed by the entity offering the service, which can be a third party, the creation of an account may involve further message exchange: for example the balance assignment through the operation offered by the Web services server (2010") "createBalanceInfo".

Once the described flow has ended, the service element (75") is prepared to offer the end user (60-1 ") the requested resource.

As indicated, Figure 6B depicts an example of a specific scenario (a new subscriber accesses a service). A person skilled in the art will understand that the flow diagram of Figure 6B is slightly modified when different scenarios are applied, such as: a subscriber registered in the services of a provider accesses for the first time an existing service, or an existing subscriber accesses a service that is already provided, or a user decides to cancel the services from an existing provider, or a subscriber recharges the credit defined for that provider, etc.

As discussed in reference to the service provisioning example, the Web service level (120) shown in Figure 4 and depicted in Figure 5B by means of the Web services interface (201 "), is the border between third parties (in the event that said third parties are the providers of one or several certain services) and a telecommunications operator's network. In the case of subscriber provisioning, the Web service level (120) offers a series of operations that the third parties can use in their business logic to subscribe new subscribers to their services and to charge for access to said services. This Web service level comprises the three possible groups of operations described below:
1) User or subscriber account operations: In order to manage user accounts; each user may further have a predefined number N of accounts. In the event that the operator is a cellular or mobile communications operator, said accounts may be associated to an identifier, such as the MSISDN, IMSI, etc. The type of access to the services of the communications operator (or of the third party using the infrastructure of the communications operator) is not object of the present invention. Said access can be by means of mobile telephony (GSM, GPRS, UMTS), by means of a PC connected to a datacard or by means of a connection to internet provided by the operator. These examples must be considered to be illustrative and non-limiting. The type of services that this type of flexibility will typically require are data services that can be accessed through a connection to internet; in that case, the access can be made through a terminal, PDA with Wifi or telephone, PC with xDSL line, etc. The accounts can include lists with the user credit information. The type of operations that are allowed associated to the accounts are: *create, modify, delete, obtain, obtain accounts depending on certain parameters,* etc.
2) User credit information operations: The credit that a user or subscriber has associated to his or her own account can be consulted. Said information is stored in a data structure commonly referred to as the balance. If said user of the telecommunications operator is considered to be pre-paid, the balance will be associated to the available credit, whereas if it is post-paid it is associated to the consumed credit. The operations contained in this group the following type: *define Balance, modify Balance, delete Balance, get Balance Information, recharge Balance,* etc.
3) Billing operations: Billing operations are any operations aimed at obtaining information or having an effect on the balance of a user account prior to or after accessing a service. The typical operations are *credit check* and *credit modification.*

Just as in relation to the example of service provisioning, the adaptation level (130) of Figure 4 is responsible for suitably translating the messages associated to the operations detailed in the previous section to credit control application protocol messages. The following table summarizes the correspondence between Diameter credit control application (Diameter CCA) operations and messages for the case of subscriber provisioning:

**Table 4**

| **Operation in the Web service level** | **Type of Diameter Message** |
|---|---|
| createAccount | CCR Event=CREATE_ACCOUNT |
| modifyAccount | CCR Event= MODIFY_ACCOUNT |
| deleteAccount | CCR Event= DELETE_ACCOUNT |
| getAccount | CCR Event= GET_ACCOUNT |
| getAccountsFromPlan | CCR Event= |
| | GET_ACCOUNTS_FROM_PLAN |
| getBalancelnfosFromAccount | CCR Event= |
| | GET_BALANCE_INFOS_FROM_ACCOUNT |
| addBalanceInfoToAccount | CCR Event= |
| | ADD_BALANCE_INFO_TO_ACCOUNT |
| deleteBalanceInfosFromAccount | CCR Event=DELETE_BALANCE_INFO_OF_AN_ACCOUNT |
| createBalanceInfo | CCR Event= CREATE_BALANCE_INFO |
| modifyBalancelnfo | CCR Event= MODIFY_BALANCE_INFO |
| deleteBalanceInfo | CCR Event= DELETE_BALANCE_INFO |
| getBalancelnfo | CCR Event= GET_BALANCE_INFO |
| getBalancelnfosFromPlan | CCR Event= |
| | GET_BALANCE_INFOS_FROM_PLAN |
| getAccountsFromBalanceInfo | CCR Event= |
| | GET_ACCOUNTS_FROM_BALANCE_INF O |
| rechargeBalanceInfo | CCR Event= |
| | RECHARGE_BALANCE_INFO |
| purchaseDeal | CCR Event= PURCHASE_DEAL |
| getDealsFromAccount | CCR Event= |
| | GET_DEALS_FROM_ACCOUNT |
| getBalance | CCR Event= GET_BALANCE |
| checkBalance | CCR Event= CHECK_BALANCE |
| directDebiting | CCR Event= DIRECT_DEBITING |

As in the previous example, Figure 5B describes a credit control server (20") comprising: a web application interface (2010") configured to generate a request relating to a subscriber, where said request generates at least one SOAP protocol message; a translator (2020") for translating SOAP protocols to Diameter CCA protocol applications, configured to translate said at least one SOAP protocol message to Diameter CCA protocol messages; and a Diameter protocol stack comprising at least one credit control application configured to transmit and receive Diameter CCA protocol messages, similar to that described in relation to the previous example.

Figure 5B further shows a system for subscriber provisioning, comprising at least one credit control customer (70") configured to send at least one Diameter protocol credit control request (CCR) message towards a credit control server (20"), and a credit control server (20") as described above.

Similar to the case of service provisioning, new events are defined for subscriber provisioning associated to the credit control request (CCR) messages, which involve modifying the standard messages defined by the protocol by means of modifying values of the AVPs and adding new ones. As a result of this definition of new events, the credit control server (20") can be used to offer access to services, user account management, etc.

As in the previous aspect, the method for automatic subscriber provisioning is based on the attribute value pair (AVP) called service parameter information *(Service-Parameter-Info),* which will not be repeated for the purpose of unnecessarily duplicating the information in this specification, since said attribute value pair (AVP) has been described in the previous example (service provisioning).

The provisioning method of the present invention provides a new attribute value pair (AVP) comprising information relating to a subscriber. This new attribute value pair (AVP) is sent in a credit control request message (CCR) of the Diameter protocol from a credit control customer (70") towards a credit control server (20"). This new attribute value pair (AVP) is referred to as service parameter grouped information *(Service-Parameter-Grouped-Info)* and is similar to that described in the previous example.

The service parameter grouped information *(Service-Parameter-Grouped-Info)* attribute value pair (AVP) in turn comprises an attribute value pair with which a service parameter type *(Service-Parameter-Type)* is indicated and an attribute value pair defining a service parameter information *(Service-Parameter-Info).* Said service parameter information (Service-*Parameter-Info)* consists of an attribute value pair indicating a service parameter type *(Service-Parameter-Type)* and an attribute value pair defining a service parameter value *(Service-Parameter-Value).*

The service parameter grouped information *(Service-Parameter-Grouped-Info)* attribute value pair (AVP) is preferably included or embedded in a Diameter protocol event type message, with the *CC-Request-Type* AVP with EVENT_REQUEST(4) value, to specify the information necessary to create, modify or delete accounts associated to users, users, etc. A sample of the possible values that the AVPs embedded in the service parameter grouped information *(Service-Parameter-Grouped-Info)* AVP can have are shown in the following Table 5. It must be noted that Table 5 shows the information that is usually present at the IT applications level, but which slightly varies from one operator to another.

**Table 5**

| **Service-Parameter-Type** | **Value** | **Description** |
|---|---|---|
| 1 | PLAN-ID | Pricing plan |
| 2 | NAME | Name of the Plan |
| 3 | START-TIME | Start time for providing the service. |
| 4 | END-TIME | End time for providing the service. |
| 5 | OPERATION | Type of operation to be performed. |
| 6 | BALANCE-INFO-ID | Information of the balance where the credit of the end user is shown. |
| 9 | ACCOUNT-ID | Identifier of the user account associated to a service, to a partner, etc. |
| 10 | RESULT-CODE | Result of providing the service |
| 11 | PARTNER-ID | Identifier of the partner providing the service. |
| 12 | PRODUCT-ID | Identifier of the product that has been provided. |
| 15 | SERVICE-ID | Service identifier. |
| | | *For example, for the partner MegaTonix^{™}*, *the service can be "Download poly-tone", and the product can be "David Bisbal's last record", and the deal "Song number 1 on the record".* |
| 16 | NUM-PLAYERS | Number of players or user involved in providing the service. For example it can be applied to the service of multiplayer online games. |
| 17 | BET | Amount of the bet. |
| | | For example, for online games, value of the game, which can be used to give credit to the winner by means of points, which can be traded in for other services from the partner. |
| 18 | PRICE | Price of the service provided. |
| | | In downloads, price of the download. In multiplayer games, price per access. In general all these values can be configured by the partner. |
| 20 | SUBSCRIPTION -TYPE | Type of subscription the user has to the services of the partner (gold, premium, etc.) |
| 21 | AMOUNT | Initial balance, for example. |
| 22 | RUM | Value designated to define the metrics used to calculate the end cost of the product. |
| 23 | ROUND-PRICE-ID | Value of a round in a multiplayer game. |
| 24 | MONEY | Monetary unit used. It can be real or fictitious. |
| 25 | CREDITCARD | Information on the end customer's credit card. |
| 28 | DEAL-ID | Identifier of the deal, for example of "David Bisbal's song". |
| 29 | AUTH-TIME | Moment in which the user was authenticated in the partner. |
| 30 | STOP-TIME | Moment in which the end user stopped the session with the partner. |
| 31 | STATE | State information. |
| 33 | EVENT-ID | Type of event. Customizable value depending on the service. |
| 34 | ENOUGH-MONEY | Sufficient credit flag to enjoy a certain service. |
| 35 | AVAILABLE-AMOUNT | Flag of available credit. |
| 36 | ACCOUNT | Information of account. |
| 37 | COST | General cost of a service. |
| 39 | BALANCE-TYPE | Type of balance that the user has defined in his or her associated account: pre-paid, post-paid with a limit, etc. |
| 40 | PRODUCT-TYPE | Product type offered by the partner. |
| 100 | BALANCE-INFO | User balance information. |
| 102 | PRODUCT | Product. |
| 103 | ROUND-PRICE | Round price of a service. |
| 104 | DEAL | Deal |
| 105 | SERVICE | Service |
| 106 | SERVICE-BALANCE | Balance of a user associated to a service. |

A specific example of the type of operations that can be performed by means of the subscriber provisioning method of the present invention is provided below. The following table (Table 6) details the values that must be assigned to the value of the Service-Parameter-Type AVP when its value is 5, corresponding to *Operation.*

**Table 6**

| **Possible values for the *"value"* of the Service-*Parameter-Type AVP* when its type is 5** | **Meaning of the *"value"* of the Service-Parameter-Type AVP** |
|---|---|
| 50 | CREATE-ACCOUNT |
| 51 | MODIFY-ACCOUNT |
| 52 | DELETE-ACCOUNT |
| 53 | GET-ACCOUNT |
| 54 | GET-ACCOUNTS-FROM-PLAN |
| 55 | GET-BALANCES-INFO-FROM-ACCOUNT |
| 56 | ADD-BALANCE-INFO-TO-ACCOUNT |
| 57 | DELETE-BALANCE-INFO-FROM-ACCOUNT |
| 80 | CREATE-BALANCE-INFO |
| 81 | MODIFY-BALANCE-INFO |
| 82 | DELETE-BALANCE-INFO |
| 83 | GET-BALANCE-INFO |
| 84 | GET-BALANCES-INFO-FROM-PLAN |
| 85 | GET-ACCOUNTS-FROM-BALANCE-INFO |
| 86 | RECHARGE-BALANCE-INFO |
| 90 | PURCHASE-DEAL |
| 94 | GET-DEALS-FROM-ACCOUNT |
| 98 | GET-BALANCE |
| 100 | CHECK-BALANCE |
| 101 | DIRECT-DEBITING |

As in the previous example, the exact value of the parameters that can be included in the *Service-Parameter-Type* AVP depends on the IT applications level of the system depicted in Figure 4.

The Diameter CCA protocol event type message is generated from a request made from a web interface of an application server, as indicated in Figure 5B (2010"). This request made from a web interface (2010") generates one or more SOAP protocol messages. In the event that third parties or partner companies of the communications operator have access to said web interface (2010"), said request is made by one or several third parties.

Once said request has been generated from the web interface (2010") of an application server (201"), it is necessary to translate the messages generated by said interface, which are preferably SOAP protocol messages, to Diameter CCA protocol messages.

An answer message (CCA) is additionally sent to the Diameter protocol credit request (CCR) from the credit control server (20") towards the credit control customer (70").

To give an example of Diameter CCA Messages, the format for Diameter messages of the "Account Creation" operation is detailed below. As in the "Service Creation" example, when the name of an AVP is between brackets, it means that its inclusion in the message is optional. Furthermore, some of these optional AVPs are crossed out because they have not been used in said example, but they have been included in the example so that the message does not lose generality. This example must be considered to be merely illustrative and non-limiting.

```
 Credit Control Request
 <Credit-Control-Request>::= <Diameter Header: 272, REQ, PXY >
 < Session-Id > = adaptation.;<val1>;<val2>;<Tstamp>/<@MAC>
 // Identifier of the session that the request refers to
 {Origin-Host}= adap.system.customer
 //Name of the origin host (sender) of the request
 {Origin-Realm} = vodafone.com
 // Name of the virtual domain in which the request is handled
 {Auth-Application-Id}= 4
 // Fixed value, identifier of the application or type of service. It is usually
 assigned by the telecommunications operator.
 {Service-Context-Id} = version1.third.party@vodafone.com
 // Service that is being requested
 {CC-Request-Type} = 4 (EVENT_REQUEST)
 //Type of message
 {CC-Request-Number} = 0
 // Message sequence number indicator: this value increases successively
 throughout the session.
 [ Destination-Host ] = system.server.VF
 //Destination host of the request CCR
 [ User-Name ] = service1.type@provider.com
 //Application that is making use of the service.
 llSub-session identifier. The Diameter Base protocol allows defining sub-
 sessions within an existing session. The creation of sub-sessions is used to
 carry out accounting for different events or situations that can be billed within a
 service associated to a session.
 // Correlation identifier of different sub-sessions within a session.
 // Identify that it has the value of the number of times that the Diameter CCA
 protocol stack has been re-started
 [Event-Timestamp ] = 10102/2006 17:51:47
 // Date of system on which the message was sent
 *[Subscription-Id]=
     {Subscription-Id-Type}= 4 (PRIVATE)
     {Subscription-Id-Data} = <provider-id>
 // Subscriber subscription identifier. The A VP Subscription-Id-Type indicates
 the format of the value encapsulated in the Subscription-Id-Data. Possible
 values for the Subscription-Id-Type are 0 when they are in format E.164, 1 for
 the IMSI (International Mobile Subscriber Identity) format, 2 if it is SIP URI, 3 if
 it is NAI (Network Access Identifier) type or 4 if the format is private. In this
 case the Subscription-Id-Data will be the name or identifier of the service
 provider, written in private format.
 // This AVP is used to include the identifier of the service that is being provided
 to the end user.
 // This AVP can be used when Diameter CCA protocol event type messages
 are used, and it will have different values when a session is terminated by one
 of the active parties in the communication (Customer or server) to identify the
 causes.
 // This AVP is used to include information regarding the measurement units
 required to start providing a service. It makes sense if the messages are user
 credit control CCR messages.
 // This AVP indicates the required type of credit control action. It makes sense
 if the CCR command corresponds with any of those defined for controlling the
 user's credit.
 // This message is included in the user credit control CCR messages to include
 information about the credit units (minutes, volume, monetary units, etc...)
 consumed by the user until that moment in the session.
 // This value is used in user credit control CCR messages and specifies if the
 Diameter customer is able to manage the credit control of different services or
 events that can be billed within the same session, regardless of the existence
 of sub-sessions.
 // This AVP is used in Diameter CCR messages to include information of the
 different services that are being billed such as requested and granted units,
 type of rate applied, rate identifier, validity time of the granted units, etc.
 // This identifier is used to correlate different CCR commands generated by
 different service elements, if any (in the event there is any redundancy, for
 reasons of protection, sizing, etc.)
 // This AVP includes information of the type of hardware in the equipment in
 which the customer application is installed to determine its capacity for
 connecting to a network.
 // This AVP contains information on the intermediate proxy elements through
 which the CCR command has passed. Its use only makes sense if said
 elements are being included in the architecture.
 // This AVP contains the identity of the previous element through which the
 Diameter message passed. If there are no intermediate proxies, the value
 must coincide with the Origin-Host AVP.
 [ Service-Parameter-Info ] =
     { Service-Parameter-Type} = 5
     {Service-Parameter-Value} = 50 (CREATE_ACCOUNT)
 [ Service-Parameter-Info ] =
     {Service-Parameter-Type} = 1
     {Service-Parameter-Value} = <plan-id>
 [ Service-Parameter-Info ] =
     {Service-Parameter-Type}=2
     {Service-Parameter-Value}=<name>
 [ Service-Parameter-Info ] =
     {Service-Parameter-Type} =3
     {Service-Parameter-Value}=<start-time>
 [ Service-Parameter-Info ] =
     {Service-Parameter-Type} = 4
     {Service-Parameter-Value} _ <end-time>
 *[Service-Parameter-Info] =
     {Service-Parameter-Type} = 6
     {Service-Parameter-Value} = <balance-info-id>
 // This succession of Service-Parameter-Info and Service-Parameter-Grouped-
 Info type AVPs contains information on the service that is being managed:
 pricing plan identifier, end user balance identifier. Before creating the account,
 the user has accessed a third party service having a pricing plan, a name, etc.,
 associated thereto..
 *[ Service-Parameter-Grouped-Info ] =
     [ Service-Parameter-Type] = 100 (BALANCE_INFO)
     [ Service-Parameter-Info ] =
            { Service-Parameter-Type} = 6
            { Service-Parameter-Value} = <balance-info-id>
     [ Service-Parameter-Info ] =
            {Service-Parameter-Type}= 1
            {Service-Parameter-Value}=<plan-id>
     [Service-Parameter-Info] =
            {Service-Parameter-Type}=2
            {Service-Parameter-Value}=<name>
     [Service-Parameter-Info] =
            {Service-Parameter-Type}=39
            {Service-Parameter-Value}=<balance-type>
     [ Service-Parameter-Info ] =
            {Service-Parameter-Type} = 24
            {Service-Parameter-Value} = <money>
     [ Service-Parameter-Info ] =
            {Service-Parameter-Type}=25
            {Service-Parameter-Value}=<creditcard>
 // This Service-Parameter-Grouped-Info type AVP contains information
 provided by the end user and necessary for registering the new account. The
 information that must be included is indicated between less than (<) and
 greater than (>) symbols.
 Credit Control Answer
 <Credit-Control-Answer> ::= < Diameter Header: 272, PXY >
 < Session-ld > = adap.opera;<val1>;<val2>;<Tstamp>l<@MAC>
 // Identifier of the session that the request refers to. It must coincide with the
 value of this AVP in the associated request CCR.
 { Result-Code} = 2001 (DIAMETER_SUCCESS)
 // Number code indicating the result of the execution of the previous request.
 Different results are defined in RFC 4006.
 { Origin-Host} = system.server.VF
 //Name of the origin host (sender) of the request
 { Origin-Realm} = vodafone.com
 II Name of the virtual domain in which the request is handled
 { Auth-Application-Id } = 4
 // Fixed value, identifier of the application or type of service. It is usually
 assigned by the telecommunications operator.
 { CC-Request-Type } = 4 (EVENT_REQUEST)
 //Type of message
 { CC-Request-Number } = 0
 // Message sequence number indicator: this value increases successively
 throughout the session.
 // Application that is making use of the service.
 // This AVP contains information about if the server supports failover
 mechanisms.
 //Sub-session identifier. The Diameter Base protocol allows defining sub-
 sessions within an existing session. The creation of sub-sessions is used to
 cany out accounting for different events or situations that can be billed within a
 service associated to a session.
 // Correlation identifier of different sub-sessions within a session.
 // Identify that it has the value of the number of times that the Diameter CCA
 protocol stack has been re-started
 [ Event-Timestamp ]= 10/02/2006 17:51:47
 //Date of the system indicating the moment in which the answer CCA was
 sent.
 // This AVP is used in Diameter CCA subscriber credit control type messages
 to specify the service control units (minutes, volume, etc.) that the user has
 assured for the current credit balance associated to his or her account. It may
 or may not coincide with the units reflected in the Requested-Service-Unit A VP
 of the CCR command.
 // This AVP is used in Diameter CCA messages to include information of the
 different services that are being billed such as requested and granted units,
 type of rate applied, rate identifier, validity time of the granted units, etc.
 // This AVP is used in Diameter CCA messages to include service cost
 information in monetary units defined by the ISO 4217 standard.
 // This AVP is used in Diameter CCA subscriber credit control type messages
 to indicate if the units specified in the Granted-Service-Units AVP are the last
 available units according to the user's balance for the service in progress. It
 will also indicate the action that must be taken after said units expire.
 // This AVP is used in Diameter CCA subscriber credit control type messages
 to indicate whether or not the subscriber has enough credit in his or her
 balance to access the service requested by the Service Element.
 // This AVP contains information on the failover mechanism accepted by the
 Diameter server. For example, in the event that the messages are not correctly
 delivered to the server, it indicates if another attempt should be made to send
 them, if the session should be terminated or if they should be redirected to any
 other server entity acting as backup.
 // This AVP contains information on the failover mechanism accepted by the
 Diameter server when credit control operations are being conducted. For
 example, in the event that the messages are not correctly delivered to the
 server, it indicates if the service should still be offered to the end customer
 even at the cost of not assuring the payment, or if said messages should be
 stored in some buffer type entity.
 // This AVP contains information on the validity time during which the
 measurement units for the service (minutes, volume, etc.) that is being
 provided can be used. Including it in Diameter CCA messages only makes
 sense when they are messages associated to a subscriber credit control.
 // This AVP may appear multiple times or not, indicating the host to which the
 present Diameter message should be redirected.
 // This AVP indicates how redirect mechanisms must be done: through cache,
 through the realm, if it must be done for all the messages belonging to the
 same session, etc. Including it in Diameter CCA messages only makes sense
 when the Diameter server supports redirect mechanisms.
 // This AVP appears when the server Diameter supports redirect mechanisms
 and indicates the maximum number of seconds that the messages which must
 be redirected will remain in cache.
 // This AVP contains information on the intermediate proxy elements through
 which the CCR command has passed. Its use only makes sense if said
 elements are being included in the architecture.
 // This AVP contains the identity of the previous element through which the
 Diameter message passed. If there are no intermediate proxies, the value
 must coincide with the Origin-Host AVP.
 *[Failed-AVP]
 // The CCR command associated to this answer CCA and which were not
 successfully analyzed by the server.
 [ Service-Parameter-Info ] =
     {Service-Parameter-Type} = 10
     {Service-Parameter-Value} = <result-code>
 // This Service-Parameter-Info type AVP is also included to indicate an error
 code associated to the create account operation: if it has been carried out
 successfully or not and the reason for the error, if any.
 [ Service-Parameter-Info ] =
     {Service-Parameter-Type}= 9
     {Service-Parameter-Value}= <account-id>
 // This Service-Parameter-Info type AVP is included to return the created
 account identifier associated to the end user. This value will be propagated
 towards the Service-Element for its subsequent use in the control of the credit
 of the user while providing the service.
```

A complex credit control Server (20', 20") allowing the implementation of a larger number of processes which go beyond credit control for a prepaid service offered by the telecommunications operator itself is thus obtained under the sample architecture proposed in the standard.

In view of this description and set of drawings, a person skilled in the art will understand that the invention has been described according to some preferred embodiments thereof, but that multiple variations can be introduced in said preferred embodiments without departing from the object of the invention as it is claimed below.

## Claims

1. A method for the automatic provisioning of telecommunications services between a credit control customer and a credit control server by means of the Diameter CCA protocol, comprising:
- sending a Diameter protocol credit control request message from a credit control customer (70') towards a credit control server (20'),
**characterized in that** said credit control request message comprises at least one attribute value pair (AVP) comprising information relating to a service.

2. The method according to claim 1, **characterized in that** said attribute value pair (AVP) in turn comprises an attribute value pair with which it indicates a service parameter type and at least one attribute value pair defining service parameter information.

3. The method according to claim 2, **characterized in that** said service parameter information consists of an attribute value pair indicating a service parameter type and an attribute value pair defining a service parameter value.

4. The method according to any of the previous claims, **characterized in that** said attribute value pair (AVP) comprising information relating to a service is embedded in a Diameter CCA protocol event type message.

5. The method according to claim 4, **characterized in that** said Diameter CCA protocol event type message comprises information necessary to execute one of the following operations: third party product operations and third party service operations.

6. The method according to any of claims 4 or 5, **characterized in that** said Diameter CCA protocol event type message is generated from a request made from a web interface (2010').

7. The method according to claim 6, **characterized in that** said request generates at least one SOAP protocol message.

8. The method according to any of claims 6 or 7, **characterized in that** said request made from a web interface (2010') is made by a third party having access to said web interface (2010').

9. The method according to any of claims 7 or 8, further **characterized by** the step of translating (2020') the SOAP protocol messages generated from said web interface (2010') to Diameter Base protocol messages and its applications.

10. The method according to any of the previous claims, **characterized by** sending a Diameter CCA protocol credit control answer message from the credit control server (20') towards said credit control customer (70').

11. A credit control server (20') **characterized by** comprising:
- a web application interface (2010') configured to generate a request relating to a service, where said request generates at least one SOAP protocol message;
- a translator (2020') for translating SOAP protocols to Diameter CCA protocol applications, configured to translate said at least one SOAP protocol message to Diameter CCA protocol messages;
- a Diameter protocol stack comprising at least one credit control application configured to transmit and receive Diameter CCA protocol messages.

12. A system for service provisioning, **characterized by** comprising:
- a credit control customer (70') configured to send at least one Diameter CCA protocol credit control request message towards a credit control server (20'),
- a credit control server (20') according to claim 11.

13. A method for automatic subscriber provisioning between a credit control customer and a credit control server by means of the Diameter CCA protocol, comprising:
- sending from a credit control customer (70") a Diameter protocol credit control request message towards a credit control server (20"),
**characterized in that** said credit control request message comprises at least one attribute value pair (AVP) comprising information relating to a subscriber.

14. The method according to claim 13, **characterized in that** said attribute value pair (AVP) in turn comprises an attribute value pair with which it indicates a service parameter type and at least one attribute value pair defining a service parameter information.

15. The method according to claim 14, **characterized in that** said service parameter information consists of an attribute value pair indicating a service parameter type and an attribute value pair defining a service parameter value.

16. The method according to any of claims 13 to 15, **characterized in that** said attribute value pair (AVP) comprising information relating to a subscriber is embedded in a Diameter CCA protocol event type message.

17. The method according to claim 16, **characterized in that** said Diameter CCA protocol event type message comprises information necessary to execute one of the following operations: user account operations, user credit information operations and billing operations.

18. The method according to any of claims 16 or 17, **characterized in that** said Diameter CCA protocol event type message is generated from a request made from a web interface (2010").

19. The method according to claim 18, **characterized in that** said request generates at least one SOAP protocol message.

20. The method according to any of claims 18 or 19, **characterized in that** said request made from a web interface (2010") is made by a third party having access to said web interface (2010").

21. The method according to any of claims 19 or 20, further **characterized by** the step of translating (2020") the SOAP protocol messages generated from said web interface (2010") to Diameter Base protocol messages and its applications.

22. The method according to any of claims 13 to 21, **characterized by** sending a Diameter CCA protocol credit control answer message from the credit control server (20") towards said credit control customer (70").

23. A credit control server (20") **characterized by** comprising:
- a web application interface (2010") configured to generate a request relating to a subscriber, where said request generates at least one SOAP protocol message;
- a translator (2020") for translating SOAP protocols to Diameter CCA protocol applications, configured to translate said at least one SOAP protocol message to Diameter CCA protocol messages;
- a Diameter protocol stack comprising at least one credit control application configured to transmit and receive Diameter CCA protocol messages.

24. A system for subscriber provisioning, **characterized by** comprising:
- a credit control customer (70") configured to send at least one Diameter CCA protocol credit control request message towards a credit control server (20"),
- a credit control server (20") according to claim 23.

25. The system according to claim 24, **characterized by** further comprising an Authentication, Authorization and Accounting server (30") designed to authenticate and authorize the end subscriber.
